# FASCICULE DE BREVET EUROPEEN

(11) **EP 3 066 668 B1**
(45) Date de publication et mention de la délivrance du brevet: **30.08.2017**
(21) Numéro de dépôt: 14793477.2
(22) Date de dépôt: 23.10.2014
(51) Int. Cl.: G21C 1/32, G21C 15/18

(54) **SYSTEME D'EVACUATION DE LA PUISSANCE D'UN COEUR DE REACTEUR A EAU PRESSURISEE**
VORRICHTUNG ZUR ENTFERNUNG DER ENERGIE AUS EINEN DRUCKWASSERREAKTORKERN
SYSTEM FOR REMOVING THE POWER FROM A PRESSURISED-WATER REACTOR CORE

(30) Priorité: 06.11.2013 FR 1360851
(43) Date de publication de la demande: 14.09.2016
(73) Titulaire: Société Technique pour l'Energie Atomique Technicatome, 91190 Villiers Le Bacle (FR)
(72) Inventeur: CASTANIE, Christophe, F-13011 Marseille (FR)
(74) Mandataire: Cabinet Camus Lebkiri
(86) Numéro de dépôt international: PCT/EP2014/072714
(87) Numéro de publication internationale: WO 2015/067475

(56) Documents cités:
- FR-A1- 2 985 841
- FR-A1- 2 985 842
- JP-A- 2003 043 176
- US-B1- 6 269 873

## Description

### DOMAINE TECHNIQUE

L'invention concerne un système d'évacuation de la puissance d'un coeur de réacteur à eau pressurisée. Plus particulièrement, l'invention vise à proposer une circulation primaire optimisée pour réacteur nucléaire.

### ETAT DE LA TECHNIQUE ANTERIEUR

Le document FR2985842 décrit un système d'évacuation de la puissance d'un coeur de réacteur à eau pressurisée. Ce système d'évacuation comporte un circuit primaire dans lequel circule de l'eau appelée « eau primaire » dans la suite. Ce circuit primaire permet de faire circuler l'eau primaire à travers le coeur grâce à une branche principale, puis à travers au moins une branche qui traverse un générateur de vapeur et à travers au moins une branche qui traverse un échangeur de sécurité. Après avoir traversé le générateur de vapeur et l'échangeur de sécurité, l'eau primaire retourne vers le coeur. La branche comportant le générateur de vapeur est appelée « branche de puissance » dans la suite. La branche comportant l'échangeur de sécurité est appelée « branche de sécurité » dans la suite. La branche de puissance permet de produire de la vapeur d'eau en fonctionnement normal en transférant l'énergie thermique de l'eau primaire à une eau secondaire à travers le générateur de vapeur. La branche de sécurité permet d'évacuer la puissance résiduelle en cas d'accident en transférant l'énergie thermique de l'eau primaire à une piscine d'eau tertiaire. Dans ce document, on appelle « fonctionnement normal » un mode de fonctionnement dans lequel le réacteur nucléaire fonctionne et on appelle « accident » ou « fonctionnement de sécurité » un mode de fonctionnement dans lequel le réacteur nucléaire est arrêté.

En fonctionnement normal, des pompes permettent de faire circuler l'eau primaire à travers le circuit primaire. Par contre, en cas d'accident, les pompes sont arrêtées mais comme l'échangeur de sécurité et le générateur de vapeur sont situés en hauteur par rapport au coeur, l'eau primaire continue de circuler dans le circuit primaire par convection naturelle.

Toutefois, dans le système d'évacuation de ce document, les branches de puissance et de sécurité ne sont pas cloisonnées l'une par rapport à l'autre, sauf au niveau des échangeurs eux-mêmes, de sorte que l'eau primaire circule en permanence dans toutes les branches. En effet, dans l'art antérieur, les branches de puissance et de sécurité ne sont pas séparées l'une de l'autre et les pompes permettant le passage de l'eau primaire à travers les branches de sécurité et de puissance sont communes à ces deux branches de sorte que l'eau primaire est entraînée en permanence à travers toutes les branches. Par conséquent, en fonctionnement normal, l'eau primaire circule également dans la branche de sécurité, ce qui entraîne une perte de la puissance produite. De même, en fonctionnement de sécurité, l'eau primaire circule également dans la branche de puissance. Cette circulation de l'eau primaire en permanence dans toutes les branches entraîne donc une perte d'efficacité globale du système.

### EXPOSE DE L'INVENTION

L'invention permet de remédier aux inconvénients de l'état de la technique en proposant une solution dans laquelle :
- En fonctionnement normal, l'eau circule préférentiellement dans la branche de puissance ;
- En cas d'accident, l'eau circule préférentiellement dans la branche de sécurité.

Pour cela, un premier aspect de l'invention concerne un système d'évacuation de la puissance produite par un coeur de réacteur nucléaire à eau pressurisée, le système d'évacuation de la puissance comportant un circuit primaire dans lequel circule une eau primaire dans un sens de circulation, le circuit primaire comportant:
- une branche principale traversant le coeur ;
- au moins une branche de puissance traversant un échangeur de puissance apte à transférer au moins une partie de l'énergie thermique de l'eau primaire qui transite par la branche de puissance vers une eau secondaire;
- au moins une branche de sécurité traversant un échangeur de sécurité apte à dissiper au moins une partie de l'énergie de l'eau primaire qui transite par la branche de sécurité;
la branche de puissance et la branche de sécurité étant chacune disposées en série avec la branche principale, la branche de puissance et la branche de sécurité étant disposées en parallèle entre elles,
le système d'évacuation de la puissance étant caractérisé en ce que la branche de puissance et la branche de sécurité sont distinctes l'une de l'autre et en ce qu'il comporte :
- une pompe hydraulique disposée sur la branche de puissance, la pompe hydraulique étant apte à être activée de manière à entraîner l'eau primaire à travers la branche de puissance dans le sens de circulation;
- des moyens de blocage aptes à :
   ∘ limiter la circulation de l'eau primaire dans la branche de sécurité dans un sens opposé au sens de circulation ;
   ∘ autoriser la circulation de l'eau primaire dans la branche de sécurité dans le sens de circulation.

Ainsi, l'invention propose tout d'abord de cloisonner les branches de puissance et de sécurité et de n'installer des pompes que dans les branches de puissance. Ainsi, en fonctionnement normal, la pompe fonctionne de sorte que l'eau est dirigée préférentiellement dans la branche de puissance par la pompe, tandis qu'en fonctionnement de sécurité, la pompe est arrêtée de sorte que sa présence crée une perte de charge dans la branche de puissance dans laquelle elle a été placée. En fonctionnement de sécurité, l'eau primaire est donc dirigée préférentiellement dans la branche de sécurité qui ne comporte pas de pompe. Le cloisonnement des branches de puissance et de sécurité et la présence de la pompe uniquement dans la branche de puissance permet donc de diriger préférentiellement l'eau primaire dans la branche de puissance lorsque la pompe fonctionne et de diriger préférentiellement l'eau primaire dans la branche de sécurité lorsque la pompe est à l'arrêt. Toutefois, si le système d'évacuation ne comportait pas de moyens de blocage aptes à éviter que l'eau primaire ne remonte dans la branche de sécurité dans un sens opposé au sens de circulation, en fonctionnement normal, l'eau irait du coeur vers la branche de puissance, puis en sortie de la branche de puissance, toute l'eau ne se dirigerait pas vers le coeur, mais une partie de l'eau se dirigerait vers la branche de sécurité dans un sens opposé au sens de circulation. Ainsi, une quantité non négligeable d'eau primaire circulerait en boucle à travers les branches de puissance et de sécurité, sans passer par le coeur, ce qui serait préjudiciable pour le bon refroidissement du coeur. La présence des moyens de blocage permet donc de limiter très fortement cette remontée de l'eau primaire dans la branche de sécurité en fonctionnement normal.

Dans ce document, les mots « entrée » et « sortie » sont utilisés en référence au sens de circulation du fluide dans la branche de puissance lorsque la pompe hydraulique fonctionne.

Le système d'évacuation selon le premier aspect de l'invention peut également comporter une ou plusieurs des caractéristiques ci-après prises indépendamment les unes des autres ou selon toutes les combinaisons techniquement possibles.

Selon un premier mode de réalisation, les moyens de blocage comportent une diode hydraulique disposée sur la branche de sécurité, la diode hydraulique étant agencée de façon à autoriser le passage de l'eau dans le sens de circulation et à freiner le passage de l'eau dans le sens opposé au sens de circulation. Ainsi, selon ce premier mode de réalisation, une diode hydraulique est disposée en sortie de la branche de sécurité. Cette diode hydraulique permet à l'eau de circuler facilement dans le sens de circulation et plus difficilement dans le sens opposé au sens de circulation. Ainsi, en fonctionnement normal, l'eau circule dans la branche de puissance dans le sens de circulation grâce à la pompe. Par contre, elle ne circule pas dans la branche de sécurité dans le sens de circulation car cette branche de sécurité ne comporte pas de pompe : l'eau est donc dirigée préférentiellement dans la branche pourvue de la pompe. En outre, l'eau ne circule pas non plus dans la branche de sécurité dans le sens opposé au sens de circulation grâce à la diode hydraulique qui empêche l'eau de circuler dans ce sens. En fonctionnement de sécurité, la présence de la pompe arrêtée dans la branche de puissance crée une perte de charge dans cette branche, tandis que dans la branche de sécurité, aucun dispositif ne crée de perte de charge dans le sens de circulation, de sorte que l'eau passe préférentiellement dans la branche de sécurité.

La diode hydraulique est de préférence disposée sur la branche de sécurité en sortie de l'échangeur de sécurité de façon à optimiser son efficacité.

Selon un deuxième mode de réalisation, les moyens de blocage comportent une trompe à eau comportant un injecteur disposé en sortie de la branche de puissance agencé de telle sorte qu'une dépression est créée en sortie de la branche de sécurité.

On appelle « trompe à eau » un système à deux branches dont l'une est terminée par un injecteur. On appelle « injecteur » un conduit présentant une diminution de section en sortie de sorte que le fluide subit une accélération lorsqu'il traverse l'injecteur et qu'une dépression est créée en sortie de l'injecteur. Les branches de sécurité et de puissance étant reliées, l'injecteur situé en sortie de la branche de puissance permet de créer une dépression en sortie de la branche de sécurité. Ainsi, en fonctionnement normal, chaque trompe à eau est dimensionnée de façon à aspirer l'eau primaire en sortie de la branche de sécurité dans le sens de circulation, de sorte que le fluide ne puisse pas ou peu remonter dans la branche de sécurité dans un sens opposé au sens de circulation. Ainsi, en fonctionnement normal, l'eau circule préférentiellement dans la branche de puissance pourvue de la pompe et elle ne peut pas non plus remonter dans la branche de sécurité, du fait de la présence de la dépression en sortie de la branche de sécurité. Par contre, en fonctionnement de sécurité, la présence de la pompe arrêtée dans la branche de puissance crée une perte de charge dans cette branche, tandis qu'aucun dispositif ne crée de perte de charge dans la branche de sécurité. Ainsi, le fluide s'écoule préférentiellement dans la branche de sécurité.

Avantageusement, les moyens de blocage comportent en outre un convergent situé en sortie de la branche de sécurité de façon à optimiser le fonctionnement de la trompe à eau.

Avantageusement, les moyens de blocage comportent outre un mélangeur disposé à la jonction entre la sortie du convergent et la sortie de l'injecteur. Le mélangeur permet d'optimiser le fonctionnement de la trompe à eau.

Avantageusement, les moyens de blocage comportent en outre un diffuseur disposé en sortie du mélangeur de façon à optimiser le fonctionnement de la trompe à eau.

Avantageusement, la pompe hydraulique est disposée en sortie de l'échangeur de puissance.

L'échangeur de puissance est de préférence un générateur de vapeur qui permet de transférer l'énergie thermique de l'eau primaire vers l'eau secondaire de façon à transformer cette eau secondaire en vapeur d'eau.

L'échangeur de puissance et l'échangeur de sécurité présentent de préférence la même structure. Ce sont de préférence des échangeurs thermiques simple passe.

Un deuxième aspect de l'invention concerne également un réacteur nucléaire à eau pressurisée comportant :
- Une enceinte primaire;
- Un coeur de réacteur situé dans l'enceinte primaire ;
- Un système d'évacuation selon l'une des revendications précédentes.

Selon un mode de réalisation, l'enceinte primaire comporte un fond de cuve.

L'échangeur de puissance et l'échangeur de sécurité sont de préférence situés à une hauteur par rapport au fond de cuve qui est supérieure à la hauteur à laquelle se trouve le coeur par rapport au fond de cuve de façon à favoriser la convection naturelle de l'eau primaire à travers le coeur. En effet, plus l'échangeur de puissance et l'échangeur de sécurité se trouvent en hauteur par rapport au coeur, plus la convection naturelle de l'eau primaire est efficace, du fait du poids des colonnes d'eau chaude et froide qui est ainsi optimisé.

Selon un mode de réalisation, l'échangeur de puissance est situé à une même hauteur par rapport au fond de cuve que l'échangeur de sécurité.

### BREVE DESCRIPTION DES FIGURES

D'autres caractéristiques et avantages de l'invention ressortiront à la lecture de la description détaillée qui suit, en référence aux figures annexées, qui illustrent :
- La figure 1, une représentation schématique d'un réacteur nucléaire selon un mode de réalisation de l'invention ;
- La figure 2, une représentation schématique d'un système d'évacuation selon un premier mode de réalisation de l'invention ;
- La figure 3, une autre représentation schématique du système d'évacuation de la figure 2 ;
- La figure 4, une représentation schématique d'un système d'évacuation selon un deuxième mode de réalisation de l'invention ;
- La figure 5, une autre représentation schématique du système d'évacuation de la figure 4 ;
- La figure 6, une vue en coupe d'une partie du système d'évacuation des figures 4 et 5.

Pour plus de clarté, les éléments identiques ou similaires sont repérés par des signes de références identiques sur l'ensemble des figures.

### DESCRIPTION DETAILLEE D'AU MOINS UN MODE DE REALISATION

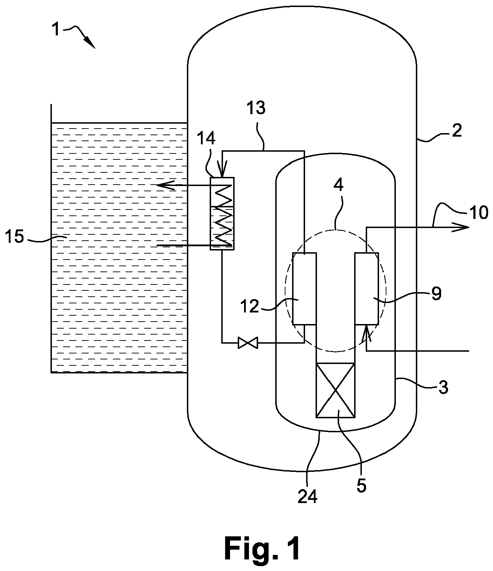

La figure 1 représente un réacteur nucléaire selon un mode de réalisation de l'invention. Ce réacteur nucléaire 1 comporte un système d'évacuation 4 de la puissance résiduelle selon l'invention. Le réacteur 1 comporte une enceinte de confinement 2 qui elle-même contient une enceinte primaire 3. L'enceinte primaire 3 contient un coeur du réacteur 5 et un système d'évacuation de la puissance générée par le coeur 5.

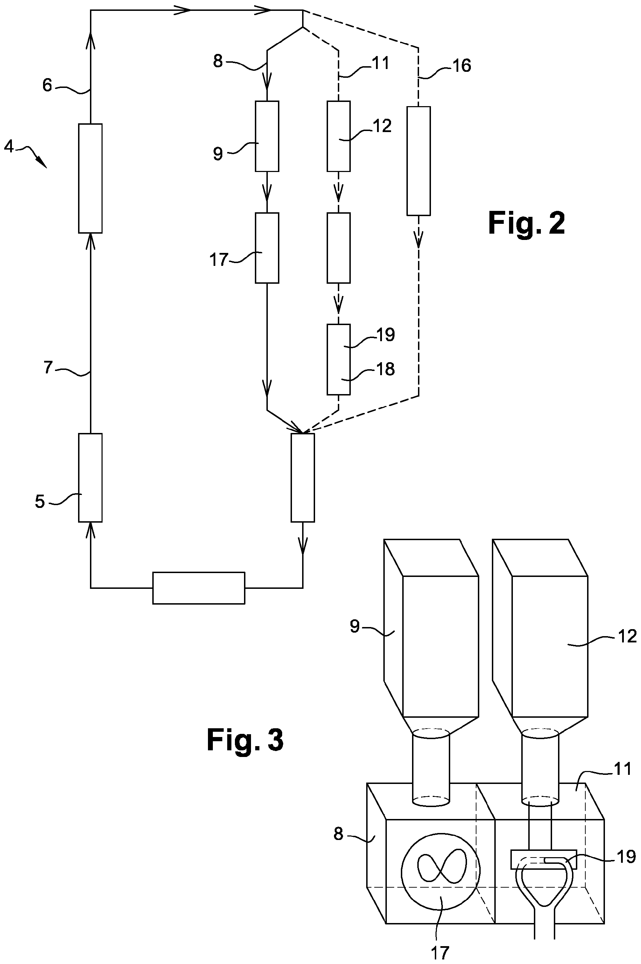

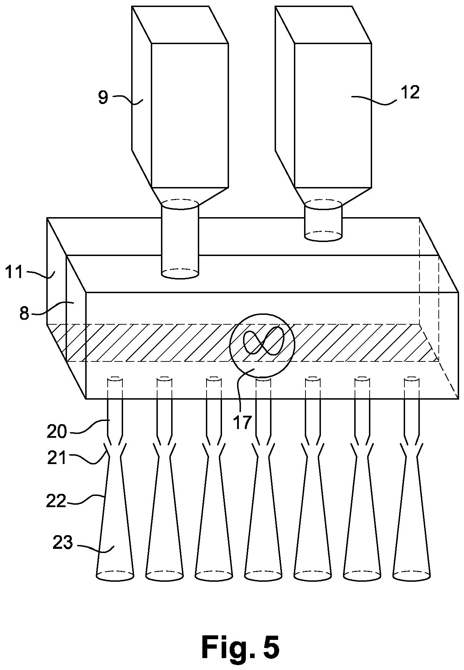

En référence aux figures 2 à 5, le système d'évacuation 4 de la puissance produite par le coeur 5 de réacteur nucléaire à eau pressurisée comporte un circuit primaire 6 dans lequel circule une eau primaire dans un sens de circulation. Dans ce document, on appelle sens de circulation, le sens de circulation de l'eau dans le circuit primaire qui correspond aux flèches représentées sur les figures. Le circuit primaire 6 comporte une branche principale 7. La branche principale 7 est formée par une canalisation qui traverse le coeur 5.

Le circuit primaire 6 comporte également au moins une branche dite « branche de puissance » 8 qui traverse un échangeur dit « de puissance » 9. L'échangeur de puissance 9 est un échangeur thermique qui permet de transférer au moins une partie de l'énergie thermique de l'eau primaire qui le traverse vers une eau secondaire 10 de façon à transformer cette eau secondaire en vapeur d'eau. Cette vapeur d'eau permet ensuite, de manière connue d'entraîner en rotation une turbine pour la production d'électricité. L'échangeur de puissance 9 peut également être appelé « générateur de vapeur ». Sur les figures, une seule branche de puissance a été représentée, mais le système d'évacuation selon l'invention peut comporter plusieurs branches de puissance, chaque branche de puissance traversant un échangeur de puissance. Ainsi, selon un mode de réalisation préférentiel, le système d'évacuation comporte 6 branches de puissance.

Le circuit primaire 6 comporte également au moins une branche de sécurité 11. La branche de sécurité 11 traverse un échangeur dit « de sécurité » 12. L'échangeur de sécurité 12 est un échangeur thermique qui permet de dissiper au moins une partie de l'énergie de l'eau primaire qui transite par la branche de sécurité 11. L'échangeur de sécurité 12 permet l'évacuation de la puissance résiduelle produite par le coeur en cas d'arrêt du réacteur. L'échangeur de sécurité 12 peut présenter la même structure que l'échangeur de puissance 8. Pour dissiper une partie de la puissance de l'eau primaire qui le traverse, l'échangeur de sécurité 12 peut transférer l'énergie thermique de l'eau primaire qui le traverse à une eau dite « de sécurité » 13, qui elle-même est refroidie grâce à un condensateur 14 relié à une réserve d'eau froide 15. Un tel système de dissipation de la puissance résiduelle est décrit plus précisément dans le document FR2985842. Sur les figures, une seule branche de sécurité a été représentée, mais le système d'évacuation peut comporter plusieurs branches de sécurité, chaque branche de sécurité traversant un échangeur de sécurité. Ainsi, selon un mode de réalisation préférentiel, le système d'évacuation comporte 2 branches de sécurité.

Comme représenté sur les figures, l'échangeur de puissance 9 et l'échangeur de sécurité 12 sont situés en hauteur par rapport au coeur 5 de façon à favoriser la convection naturelle de l'eau dans le circuit primaire. En outre, l'échangeur de puissance 9 et l'échangeur de sécurité 12 sont de préférence situés à la même hauteur l'un par rapport à l'autre. Dans ce document, la « hauteur » d'un élément est la hauteur de cet élément par rapport au fond de cuve 24 de l'enceinte primaire 3.

Le sens de circulation correspond par convention à un sens où l'eau est ascendante dans la branche principale 6 et descendante dans les branches de puissance 8, de sécurité 11 et de contournement 16.

Le circuit primaire peut également comporter une branche de contournement 16 qui permet d'assurer un renouvellement du volume d'eau situé entre les échangeurs.

Comme représenté sur les figures, la branche principale 6 débouche sur les branches de puissance 8, de sécurité 11 et sur la branche de contournement 16, qui sont distinctes les unes des autres. Les branches de puissance 8, de sécurité 11 et de contournement 16 se réunissent ensuite à nouveau dans la branche principale 6. Ainsi, la branche principale 6 est reliée en série avec chacune des branches de puissance 8, de sécurité 11 et de contournement 16. Les branches de puissance 8, de sécurité 11 et de contournement par contre sont reliées en parallèle entre elles.

Le système selon l'invention permet de diriger l'eau primaire préférentiellement dans la branche de puissance selon un premier mode de fonctionnement et il permet de diriger préférentiellement l'eau primaire dans la branche de sécurité selon un deuxième mode de fonctionnement.

Pour cela, chaque branche de puissance 8 comporte une pompe hydraulique 17 disposée, dans ce mode de réalisation, en sortie de chaque échangeur de puissance 9. Cette pompe hydraulique 17 est positionnée uniquement dans la branche de puissance et non pas dans la branche de sécurité et par conséquent, lorsqu'elle est en fonctionnement, elle permet d'aspirer l'eau préférentiellement dans la branche de puissance au détriment des branches de sécurité 11 et de contournement. Ainsi, selon le premier mode de fonctionnement, appelé « fonctionnement normal », les pompes sont en fonctionnement, de sorte qu'elles entraînent l'eau de la branche principale dans la branche de puissance, dans le sens de circulation représenté sur la figure 2 par des flèches.

Le système d'évacuation comporte également des moyens de blocage 18 agencés pour :
∘ limiter la circulation de l'eau primaire dans la branche de sécurité dans un sens opposé au sens de circulation;
∘ autoriser la circulation de l'eau primaire dans la branche de sécurité dans le sens de circulation.

Selon un premier mode de réalisation, représenté sur les figures 2 et 3, ces moyens de blocage 18 sont formés par une diode hydraulique 19 disposée, dans ce mode de réalisation, en sortie de chaque échangeur de sécurité 12. La diode hydraulique peut par exemple être conforme à celle décrite dans le document US 4 112 977. La diode hydraulique est agencée de façon à ce que l'eau puisse circuler dans la branche de sécurité dans le sens de circulation mais qu'elle ne puisse pas ou peu circuler dans la branche de sécurité dans l'autre sens. Ainsi, en fonctionnement normal, c'est-à-dire lorsque les pompes hydrauliques 17 fonctionnent, une très faible quantité d'eau sortant de la branche de puissance peut remonter dans la branche de sécurité. Le débit remontant dans la branche de sécurité est donc très faible.

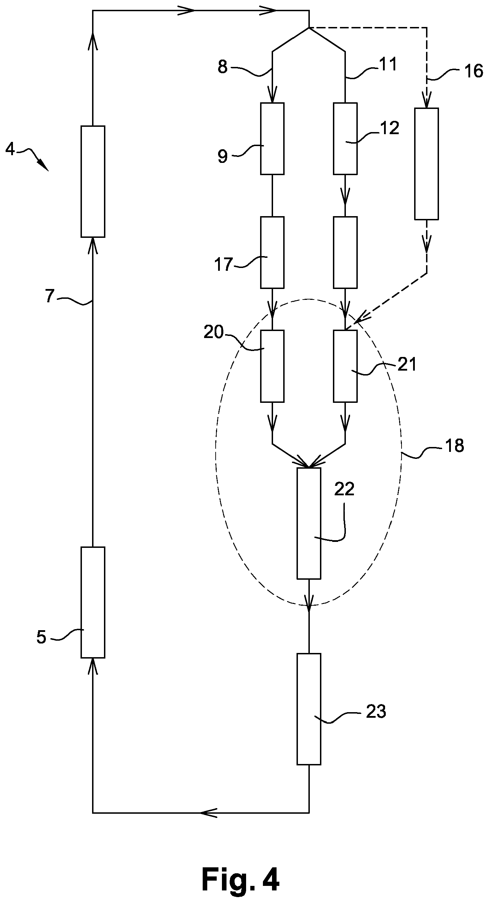

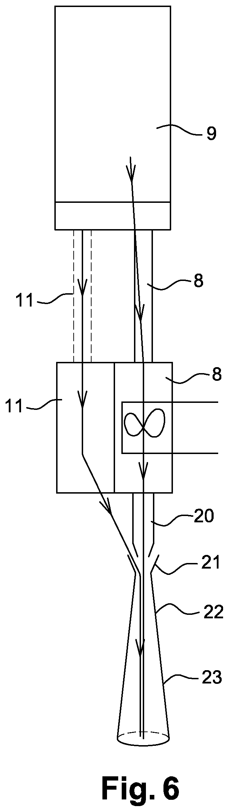

Selon un deuxième mode de réalisation, représenté sur les figures 4 à 6, les moyens de blocage 18 comportent au moins une trompe à eau comportant un injecteur 20 disposé en sortie de la branche de puissance et dimensionné de façon à créer une dépression en sortie de la branche de sécurité 11. Les moyens de blocage 18 comportent également au moins un convergent 21 disposé en sortie des branches de sécurité et de contournement. Le convergent 21 débouche dans un mélangeur 22 qui lui-même débouche dans un diffuseur 23. Ainsi, lorsque la pompe est en fonctionnement, elle aspire l'eau dans la branche de puissance et une dépression est créée en sortie de la branche de sécurité, de sorte que l'eau ne peut pas remonter dans la branche de sécurité dans un sens opposé au sens de circulation. Le dimensionnement de la mise en vitesse en sortie d'injecteur doit donc être tel que la variation de pression associée doit au moins compenser la hauteur motrice de la pompe.

Quel que soit le mode de fonctionnement, lorsque la pompe hydraulique est à l'arrêt, la présence de cette pompe crée une perte de charge dans la branche de puissance de sorte que l'eau s'écoule préférentiellement dans la branche de sécurité dans le sens de circulation, puisque rien ne crée de perte de charge dans cette branche dans ce sens de circulation.

Naturellement, l'invention n'est pas limitée aux modes de réalisation décrits en référence aux figures et des variantes pourraient être envisagées sans sortir du cadre de l'invention. Dans le premier mode de réalisation, on pourrait par exemple remplacer la diode hydraulique par un clapet hydraulique, passant sans un sens et bloquant dans l'autre. Toutefois, le clapet hydraulique présente le désavantage par rapport à la diode hydraulique de comporter des pièces mobiles et donc d'être moins fiable.

## Revendications

1. Réacteur nucléaire (1) à eau pressurisée comportant :
- Une enceinte primaire (3);
- Un coeur (5) de réacteur situé dans l'enceinte primaire (3);
- Un système d'évacuation (4) de la puissance (4) produite par le coeur (5) du réacteur nucléaire (1) à eau pressurisée, le système d'évacuation de la puissance comportant un circuit primaire dans lequel circule une eau primaire dans un sens de circulation, le circuit primaire comportant:
- une branche principale (6) traversant le coeur (5) ;
- au moins une branche de puissance (8) traversant un échangeur de puissance (9) apte à transférer au moins une partie de l'énergie thermique de l'eau primaire qui transite par la branche de puissance (8) vers une eau secondaire (10);
- au moins une branche de sécurité (11) traversant un échangeur de sécurité (12) apte à dissiper au moins une partie de l'énergie de l'eau primaire qui transite par la branche de sécurité (11);
la branche de puissance (8) et la branche de sécurité (11) étant chacune disposées en série avec la branche principale (6), la branche de puissance (8) et la branche de sécurité (11) étant disposées en parallèle entre elles,
le système d'évacuation de la puissance étant **caractérisé en ce que** la branche de puissance (8) et la branche de sécurité (11) sont distinctes l'une de l'autre et **en ce qu'**il comporte :
- une pompe hydraulique (17) disposée sur la branche de puissance (8), la pompe hydraulique (17) étant apte à être activée de manière à entraîner l'eau primaire à travers la branche de puissance (8) dans un sens de circulation;
- des moyens de blocage (18) aptes à :
∘ empêcher l'eau primaire de circuler dans la branche de sécurité (11) dans un sens opposé au sens de circulation ;
∘ autoriser la circulation de l'eau primaire dans la branche de sécurité (11) dans le sens de circulation.

2. Réacteur nucléaire (1) à eau pressurisée selon la revendication 1, dans lequel les moyens de blocage (18) comportent une diode hydraulique (19) disposée sur la branche de sécurité (11), la diode hydraulique (19) étant agencée de façon à autoriser le passage de l'eau primaire dans le sens de circulation et à freiner le passage de l'eau primaire dans le sens opposé au sens de circulation.

3. Réacteur nucléaire (1) à eau pressurisée selon la revendication 1, dans lequel les moyens de blocage (18) sont au moins une trompe à eau comportant un injecteur (20) disposé en sortie de la branche de puissance (8) agencé de telle sorte qu'une dépression est créée en sortie de la branche de sécurité (11).

4. Réacteur nucléaire (1) à eau pressurisée selon la revendication précédente, dans lequel les moyens de blocage (18) comportent en outre :
- un convergent (21) disposé à la sortie de la branche de sécurité (11) ;
- un mélangeur (22) disposé à la jonction entre la sortie du convergent (21) et la sortie de l'injecteur (20).

5. Réacteur nucléaire (1) à eau pressurisée selon la revendication précédente, comportant en outre un diffuseur (23) disposé en sortie du mélangeur (22).

6. Réacteur nucléaire (1) à eau pressurisée selon l'une des revendications précédentes, dans lequel la pompe hydraulique (17) est disposée sur la branche de puissance (8) en sortie de l'échangeur de puissance (9).

7. Réacteur nucléaire (1) selon l'une des revendications précédentes, dans lequel l'enceinte primaire (3) comporte un fond de cuve, l'échangeur de puissance (9) et l'échangeur de sécurité (12) sont situés à une hauteur par rapport au fond de cuve qui est supérieure à la hauteur à laquelle se trouve le coeur (5) par rapport au fond de cuve.

8. Réacteur nucléaire (1) selon l'une des revendications précédentes, dans lequel l'échangeur de puissance (9) est situé à une même hauteur par rapport au fond de cuve que l'échangeur de sécurité (12).

## Patentansprüche

1. Nuklearreaktor (1) mit Druckwasser, umfassend:
- Eine primäre Einfassung;
- Einen Reaktorkern (5), der sich in der primären Einfassung (3) befindet;
- Ein Austragssystem (4) der Leistung (4), die von dem Kern (5) des Nuklearreaktors (1) mit Druckwasser erzeugt ist, wobei das Austragssystem der Leistung einen primären Kreislauf umfasst, in dem ein primäres Wasser in einer Fließrichtung zirkuliert, wobei der primäre Kreislauf umfasst:
- Einen Hauptzweig (6), der den Kern (5) durchquert;
- wenigstens einen Leistungszweig (8), der einen Leistungstauscher (9) durchquert, der geeignet ist, wenigstens einen Teil der thermischen Energie des primären Wassers zu übertragen, das durch den Leistungszweig (8) zu einem sekundären Wasser (10) übergeht;
- wenigstens einen Sicherheitszweig (11), der einen Sicherheitstauscher (12) durchquert, der geeignet ist, wenigstens ein Teil der Energie des primären Wassers zu zerstreuen, das durch den Sicherheitszweig (11) hindurchtritt;
wobei der Leistungszweig (8) und der Sicherheitszweig (11) jeweils in Serie mit dem Hauptzweig (6) angeordnet sind, wobei der Leistungszweig (8) und der Sicherheitszweig (11) parallel untereinander angeordnet sind,
wobei das Austragssystem der Leistung **dadurch gekennzeichnet ist, dass** der Leistungszweig (8) und der Sicherheitszweig (11) voneinander unterschiedlich sind und dass es umfasst:
- eine Hydraulikpumpe (17), die auf dem Leistungszweig (8) angeordnet ist, wobei die Hydraulikpumpe (17) geeignet ist, derart aktiviert zu werden, dass das primäre Wasser durch den Leistungszweig (8) in einer Fließrichtung angetrieben wird;
- Blockiermittel (18), die geeignet sind, um;
∘ das primäre Wasser am Zirkulieren in dem Sicherheitszweig (11) in einer zur Fließrichtung entgegengesetzten Richtung zu hindern;
∘ das Zirkulieren des primären Wassers in dem Sicherheitszweig (11) in der Fließrichtung zuzulassen.

2. Nuklearreaktor (1) mit Druckwasser gemäß Anspruch 1, bei dem die Blockiermittel (18) eine hydraulische Diode (19) umfassen, die auf dem Sicherheitszweig (11) angeordnet ist, wobei die hydraulische Diode (19) derart angeordnet ist, dass sie den Durchgang des primären Wassers in der Fließrichtung zulässt und den Durchgang des primären Wassers in der der Fließrichtung entgegengesetzten Richtung bremst.

3. Nuklearreaktor (1) mit Druckwasser gemäß Anspruch 1, bei dem die Blockiermittel (18) wenigstens eine Wasserpumpe sind, die einen Injektor (20) umfasst, der am Ausgang des Leistungszweigs (8) angeordnet ist, der derart angeordnet ist, dass am Ausgang des Sicherheitszweigs (11) ein Unterdruck geschaffen wird.

4. Nuklearreaktor (1) mit Druckwasser gemäß dem voranstehenden Anspruch, bei dem die Blockiermittel (18) darüber hinaus umfassen:
- ein Einlaufrohr (21), das am Ausgang des Sicherheitszweigs (11) angeordnet ist;
- einen Mischer (22), der an der Schnittstelle zwischen dem Ausgang des Einlaufrohrs (21) und des Ausgangs des Injektors (20) angeordnet ist.

5. Nuklearreaktor (1) mit Druckwasser gemäß dem voranstehenden Anspruch, umfassend darüber hinaus einen Diffusor (23), der am Ausgang des Mischers (22) angeordnet ist.

6. Nuklearreaktor (1) mit Druckwasser gemäß einem der voranstehenden Ansprüche, bei dem die Hydraulikpumpe (17) auf dem Leistungszweig (8) am Ausgang des Leistungstauschers (9) angeordnet ist.

7. Nuklearreaktor (1) gemäß einem der voranstehenden Ansprüche, bei dem die primäre Einfriedung (3) einen Beckenboden umfasst, der Leistungstauscher (9) und der Sicherheitstauscher (12) sich im Verhältnis zum Beckenboden in einer Höhe befinden, die höher ist als die Höhe, in der sich der Kern (5) im Verhältnis zum Beckenboden befindet.

8. Nuklearreaktor (1) gemäß irgendeinem der voranstehenden Ansprüche, bei dem der Leistungstauscher (9) sich in Verhältnis zu dem Beckenboden auf derselben Höhe befindet wie der Sicherheitstauscher (12).

## Claims

1. Pressurised-water nuclear reactor (1) comprising:
- A primary vessel (3);
- A reactor core (5) located in the primary vessel (3);
- A system for removing (4) the power (4) produced by the core (5) of the pressurised-water nuclear reactor (1), with the system for removing the power comprising a primary circuit wherein circulates a primary water in a direction of circulation, with the primary circuit comprising:
- a main branch (6) passing through the core (5);
- at least one power branch (8) passing through a power exchanger (9) able to transfer at least one portion of the thermal energy from the primary water which transits through the power branch (8) to a secondary water (10);
- at least one safety branch (11) passing through a safety exchanger (12) able to dissipate at least one portion of the energy of the primary water which transits through the safety branch (11);
the power branch (8) and the safety branch (11) with each one being arranged in series with the main branch (6), the power branch (8) and the safety branch (11) being arranged in parallel between them,
with the system for removing the power being **characterised in that** the power branch (8) and the safety branch (11) are separate from one another and **in that** it comprises:
- a hydraulic pump (17) arranged on the power branch (8), with the hydraulic pump (17) able to be activated in such a way as to drive the primary water through the power branch (8) in a direction of circulation;
- blocking means (18) able to:
∘ prevent the primary water from circulating in the safety branch (11) in an opposite direction to the direction of circulation;
∘ authorise the circulation of the primary water in the safety branch (11) in the direction of circulation.

2. Pressurised-water nuclear reactor (1) according to claim 1, wherein the blocking means (18) comprise a hydraulic diode (19) arranged on the safety branch (11), with the hydraulic diode (19) being arranged in such a way as to authorise the passage of the primary water in the direction of circulation and to slow down the passage of the primary water in the opposite direction to the direction of circulation.

3. Pressurised-water nuclear reactor (1) according to claim 1, wherein the blocking means (18) are at least one water pump comprising an injector (20) arranged at the outlet of the power branch (8) arranged in such a way that a depression is created at the outlet of the safety branch (11).

4. Pressurised-water nuclear reactor (1) as claimed in the preceding claim, wherein the blocking means (18) further comprise:
- a nozzle (21) arranged at the outlet of the safety branch (11);
- a mixer (22) arranged at the junction between the outlet of the nozzle (21) and the outlet of the injector (20).

5. Pressurised-water nuclear reactor (1) as claimed in the preceding claim, comprising furthermore a diffuser (23) arranged at the outlet of the mixer (22).

6. Pressurised-water nuclear reactor (1) according to one of the preceding claims, wherein the hydraulic pump (17) is arranged on the power branch (8) at the outlet of the power exchanger (9).

7. Nuclear reactor (1) according to one of the preceding claims, wherein the primary vessel (3) comprises a tank bottom, the power exchanger (9) and the safety exchanger (12) are located at a height in relation to the tank bottom which is higher than the height at which the core (5) is located in relation to the tank bottom.

8. Nuclear reactor (1) according to one of the preceding claims, wherein the power exchanger (9) is located at the same height in relation to the tank bottom as the safety exchanger (12).
